(19) Europäisches Patentamt
European Patent Office
Office européen des brevets

(11) **EP 3 463 690 B1**

(12) **FASCICULE DE BREVET EUROPEEN**

(45) Date de publication et mention de la délivrance du brevet:
**11.03.2020 Bulletin 2020/11**

(21) Numéro de dépôt: **17731616.3**

(22) Date de dépôt: **24.05.2017**

(51) Int Cl.:
*B05D 7/22* (2006.01)   *C09D 183/06* (2006.01)
*C03C 17/00* (2006.01)   *C03C 17/30* (2006.01)
*C09D 183/08* (2006.01)   *C09D 183/04* (2006.01)
*B65D 23/02* (2006.01)   *C23C 18/12* (2006.01)
*C08G 77/04* (2006.01)   *C08G 77/24* (2006.01)
*C08G 77/26* (2006.01)

(86) Numéro de dépôt international:
**PCT/FR2017/051303**

(87) Numéro de publication internationale:
**WO 2017/203182 (30.11.2017 Gazette 2017/48)**

(54) **PROCEDE DE FABRICATION D'UNE COUCHE DE REVETEMENT DE LA FACE INTERNE D'UN RECIPIENT ET RECIPIENT OBTENU AVEC UN TEL PROCEDE**

VERFAHREN ZUR HERSTELLUNG EINER BESCHICHTUNG FÜR DIE INNENFLÄCHE EINES BEHÄLTERS UND NACH EINEM DERARTIGEN VERFAHREN HERGESTELLTER BEHÄLTER

METHOD FOR THE PRODUCTION OF A COATING FOR THE INNER SURFACE OF A RECEPTACLE, AND RECEPTACLE OBTAINED BY A METHOD OF SAID TYPE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.05.2016 FR 1654704**

(43) Date de publication de la demande:
**10.04.2019 Bulletin 2019/15**

(73) Titulaire: **Glass Surface Technology**
**75015 Paris (FR)**

(72) Inventeurs:
• **WAGNER, Christophe**
**87320 Bussiere-Poitevine (FR)**

• **MARSAL, Alexis**
**87000 Limoges (FR)**

(74) Mandataire: **Benech, Frédéric**
**Cabinet Benech**
**15, rue d'Astorg**
**75008 Paris (FR)**

(56) Documents cités:
FR-A1- 2 443 484     FR-A1- 2 935 594
JP-A- H05 132 065     US-A1- 2001 032 568
US-A1- 2013 035 400

**Description**

La présente invention concerne un procédé de fabrication d'une couche neutre, hybride et barrière, de revêtement au moins partiel de la face interne d'un récipient.

Elle concerne également un récipient obtenu avec un tel procédé.

Par fabrication d'une couche neutre (chimiquement), hybride (ayant une structure de réseau complexe avec des parties organiques/carbonées) et barrière, (empêchant la migration de molécules au travers) de revêtement de la face interne d'un récipient, on entend la fabrication d'une solution de recouvrement formant, après gélification puis solidification, une couche de matériau protecteur, ainsi que le recouvrement proprement dit c'est-à-dire l'apposition superficielle d'une telle solution sur la surface d'un objet formé d'un autre matériau, pour créer après gélification et durcissement cette couche de protection de façon solidaire et durable (c'est à dire supérieure à plusieurs années) compatibles avec des résultats acceptables en matière de bio compatibilité de grande qualité. Un tel revêtement modifie alors les propriétés de surface, physiques et/ou chimiques de cet autre matériau (quand il rentre en contact avec un produit).

L'invention trouve une application particulièrement importante bien que non exclusive dans le domaine de la fabrication de flacons en verre ou plastique destinés à recevoir et conserver des produits agroalimentaires, pharmaceutiques ou cosmétiques.

L'invention permet ainsi et notamment de minimiser les interactions contenant-contenu, et/ou environnement-contenu, et ce plus particulièrement pour le stockage nécessitant la conservation de produits de façon neutre pendant un temps assez long (par exemple plusieurs mois, voire années).

Classiquement on entend par conservation de façon neutre une conservation par un verre ou un plastique présentant dans le temps un relargage d'ions, par exemple d'ions sodium ou autres ions alcalins et/ou alcalino-terreux pour le verre, mais aussi tout autre types d'ions comme ceux de l'antimoine, *des* phtalates, du styrène ou des bisphénols en particulier pour les plastiques, en très faible quantité dans le liquide ou produit qui est à l'intérieur du récipient.

Par très faible quantité on entend un rapport entre masse totale des éléments extractibles et masse du liquide contenue inférieur à 6 ppm.

Le verre sodo-calcique n'est par exemple pas neutre au sens de la pharmacopée.

On sait ainsi que lorsqu'un flacon en verre est fabriqué il est nécessairement porté à des températures importantes qui engendrent notamment une migration des alcali (dans le cas d'un verre au silicate) qui remontent à la surface du verre et/ou à sa proximité immédiate, et ce de façon suffisante pour être exposés ultérieurement au contenu du récipient.

De même les contenants plastiques, notamment lorsqu'ils sont chauffés, par exemple au four micro-ondes, relarguent des substances toxiques en elles-mêmes et/ou de par leur interaction avec le contenu du récipient.

Or, les quantités de ces substances, d'alcali ou autres, bien qu'en général très petites, sont gênantes dans le cas de flacons destinés à contenir des vaccins ou produits cosmétiques dont les principes actifs doivent rester purs, ou dans le domaine alimentaire dont les contenus sont directement ingérés par l'utilisateur.

En effet l'alcalinité ou ces autres substances peuvent causer des effets dangereux sur un produit pharmaceutique et/ou cosmétique ou alimentaire, du fait de réactions inacceptables qui pourraient se produire entre la paroi du verre et le produit.

On connaît (WO 2010/112792) un procédé de recouvrement d'au moins une fraction d'une face interne d'un récipient par un matériau vitreux élaboré selon le procédé connu de l'homme du métier sous la dénomination générique de Sol-gel (Diminutif de Solution - Gel).

Le matériau vitreux, à base de silice, est obtenu sans fusion, par polymérisation d'au moins un précurseur moléculaire.

Il comprend une étape de synthèse effectuée à partir d'alcoolates de formule $M(OR)_n$, où M est un métal ou le silicium, et R un groupement alkyle $C_nH_{2n+1}$ dissout dans un solvant usuel, puis une étape plus ou moins longue de gélification avec évaporation du solvant jusqu'à solidification complète.

On connaît également (FR 2 443 484) un procédé pour empêcher la filtration d'un contaminant par une surface d'un solide par formation d'une pellicule de revêtement de silicium oxydé à partir d'un composé d'hydroxysilane chauffé.

Il est également connu (EP 2 199 264) des procédés par constitution d'une couche de silicium vitrifiée en surface à une température élevée.

De tels procédés ne permettent pas cependant d'effectuer un revêtement à froid (température ambiante) après fabrication définitive à partir de flacons formés.

On connaît encore (FR 2 886 309) une formulation de Sol-Gel pour revêtement d'une surface métallique comprenant des éléments organométalliques (notamment Zi ; Al ; Ti) et des acides agressifs et/ou polluants comme l'acide chlorhydrique.

De tels procédés Sol-Gel comportent l'introduction de nombreux éléments souvent non désirés, pour certains dangereux et contraires à l'utilisation dans le domaine cosmétique et/ou pharmacologique.

Ils sont de plus de mise en œuvre particulièrement complexe et délicate et ils relèvent d'applications/utilisations spécifiques, peu extrapolables à d'autres situations.

Ils ne permettent donc pas de manière répétitive, simple et adaptable, de revêtir de façon satisfaisante une surface intérieure avec une couche barrière Sol-Gel ayant une adhérence suffisante, et ce indépendamment de la forme du récipient.

Ils nécessitent souvent l'introduction d'éléments supplémentaires et/ou présentant des résidus en quantité importante.

La formulation de la solution doit en effet permettre d'obtenir une viscosité permettant l'application aisée de la solution tout en permettant une cinétique de gélification limitant les effets des bavures lors de l'application, tout en permettant une bonne stabilité dans le temps, ne laissant pas de craquelures dans la couche appliquée après cuisson.

On connait également (FR 2 935 594) un procédé de revêtement par couche sol-gel utilisant des colorants fixées en surface de la couche par liaison covalente.

Un tel procédé comme les autres présente plusieurs inconvénients.

Ces procédés utilisent tout d'abord des acides forts tels que l'acide chlorhydrique (HCl), privilégiés pour la préparation des solutions réactives et l'augmentation de la cinétique de la réaction.

Or de tels acides laissent passer une quantité résiduelle d'acide perturbatrice à terme de la qualité du produit contenu.

Ils n'assurent pas de plus et de manière optimale, une barrière suffisante vis à vis de la paroi du récipient pour ses relargages dans le produit contenu.

Ces procédés ne permettent pas véritablement d'augmenter la résistance hydrolytique, le gain obtenu pouvant quoiqu'il en soit encore être amélioré, sachant que même minime un tel gain par rapport à l'art antérieur est une avancée significative en termes sanitaires.

Or, l'invention permet encore une amélioration en la matière, étant observé que la qualité des couches de l'art antérieur et l'efficacité de leur fonction de barrière aux relargages et aux phénomènes d'exsudations, se détériorent dans le temps avec des cinétiques trop rapides pour les contraintes de durée de conservation notamment pour les applications en pharmacie ou en cosmétique.

Ces procédés sont également spécifiquement adaptés à un type de matériau constitutif du récipient. Ils sont par exemple particulièrement inappropriés et inefficaces pour des matériaux vitreux spécifiques et le plastique en particulier.

Pour ces derniers notamment, l'amplitude des déformations mécaniques du récipient lors par exemple d'une préhension manuelle ou une pression pour expulser un contenu gélifié, imposent une résistance mécanique et une tenue de la couche accrue mal respectée par les procédés de l'art antérieur.

Ceci est particulièrement problématique lorsque l'on souhaite fonctionnaliser cette couche, c'est-à-dire lui adjoindre des éléments chimiques permettant l'expression d'une fonction particulière telle que : la coloration de la couche, la résistance aux rayonnements électromagnétiques, l'adjonction de fonctions médicales notamment antibactériennes, des effets visuels particuliers, ou tout autre fonction.

Ces éléments sont alors soit relargués, soit n'assurent pas complètement leur fonction et dégradent la tenue de la couche au détriment de sa capacité barrière.

La présente invention vise à fournir un procédé, et un récipient obtenu notamment par un tel procédé, répondant mieux que ceux antérieurement connus aux exigences de la pratique, notamment en ce qu'elle permet de traiter tous les types de flacons y compris de matière différente comme le verre ou le plastique, et ce avec la même formulation, indépendamment des fournisseurs de ceux-ci et en engendrant moins de casse ou d'endommagement des récipients que dans l'art antérieur, en ce qu'elle améliore de manière importante les résistances hydrolytiques (jusqu'à 50% d'amélioration par rapport aux procédés de l'art antérieur), mécaniques, thermiques et chimiques de la couche, en ce qu'elle optimise l'accroche de la couche à la paroi interne du récipient, en ce qu'elle permet de fonctionnaliser la couche sans que cela ne soit au détriment de la résistance hydrolytique et en ce qu'elle permet de fonctionner en milieu confiné avec application par un pulvérisateur.

L'invention permet également d'obtenir des couches figées ou des multicouches d'une épaisseur plus importante et de bonnes cinétiques de réaction sur le plan industriel pour des températures de traitement plus faibles que dans l'art antérieur.

La présente invention a donc notamment pour objet de mettre en œuvre ces principes avec les avantages ci-dessus mentionnés en palliant les inconvénients de l'art antérieur.

Dans ce but, elle propose notamment un procédé de fabrication d'une couche hybride organo-minérale barrière et neutre, de revêtement de la face interne d'un récipient propre à contenir des produits biocompatibles avec l'homme et/ou l'animal, dans lequel

- on forme une solution contenant au moins un solvant, de l'eau, au moins un premier précurseur moléculaire complexant de la famille des alkoxysilanes, au moins un second précurseur moléculaire organofonctionnel et/ou du silicone, et de l'acide citrique comme catalyseur,

- on applique la solution ainsi complexée sur au moins une partie de la face interne du récipient, la solution étant en cours d'hydrolyse et condensation, et
- on sèche la solution ainsi appliquée à une température déterminée avant évacuation du récipient et stockage.

Grâce à ce procédé la barrière ainsi formée est neutre, imperméable aux rayonnements et aux espèces chimiques dans les deux sens de traversée du revêtement.

Le revêtement est également plus résistant.

Par couche hybride organo-minérale on entend une couche mettant en œuvre les précurseurs et/ou silicone tels que précisé ci-dessus.

On notera qu'un alkoxysilane peut avoir des groupes organiques non directement rattachés à l'atome Si, par exemple par l'intermediaire d'ions oxygène.

Un précurseur organofonctionnel signifie quant à lui qu'il y a au moins un atome de C rattaché directement à l'ion minéral.

Ces chaines carbonées permettent de donner des fonctions au revêtement, sans être hydrolysés comme les parties reliées par des ions Oxygène.

Avantageusement l'invention va notamment et par exemple mettre en oeuvre des précurseurs organosilane (qui font partie de la famille des précurseurs organominéraux) pour apporter des fonctions de renfort et d'accroche.

Ici l'octadecyltrimethoxysilane est la chaine carbonnées (16 C) la plus longue, tandis que les silanes dipodaux présentent quant à eux deux branches silanées (permettant une meilleure accroche).

Ces précurseurs apportent également des fonctions en surface de la couche avec le PFAS et les Fluor sur la chaine carbonée.

Enfin, on utilise également avantageusement des précurseurs d'aluminium et le 3 (trimethoxysilyl) propyl methacrylate, pour renforcer la résistance de la couche et le renfort mécanique respectivement.

Avec l'invention il est possible d'effectuer un marquage interne coloré par une couche protectrice de résistance hydrolytique importante y compris sur du plastique et avec d'une part une qualité esthétique augmentée (absence de grain, homogénéité de la couche sans bavure, même pour des épaisseurs importantes) et d'autre part une tenue dans le temps optimisée.

En dépit du processus constant de gélification/solidification il est également possible de conserver sur le long terme le gel (solution partiellement gélifiée) produit à partir de la solution ci-dessus et de travailler à température ambiante.

Par en cours d'hydrolyse et condensation on entend le fait que la réaction chimique globale n'a pas encore atteint son degré d'avancement final ou maximal.

On sait que le taux d'avancement $\xi_r$ d'une réaction est défini par $\xi_r = \dfrac{\xi}{\xi_{max}}$ avec $\xi_r \in [0;1]$ et

$\xi$ : degré d'avancement à l'instant donné t

$\xi_{max}$ : degré d'avancement final ou maximal.

On définit par ailleurs l'avancement de la réaction par $d\xi = \dfrac{dn_i}{v_i}$ avec

$dn_i$ : variation du nombre de moles depuis l'instant initial et

$v_i$: nombre stœchiométrique de la réaction.

En l'espèce, le taux d'avancement doit être à une valeur inférieure à 1, permettant la micro pulvérisation.

De façon alternative, par en cours d'hydrolyse et condensation, on entend également que la solution en cours de gélification est à l'instant t, d'une viscosité permettant une application homogène, par exemple une viscosité dynamique à 20° C comprise entre 1 et 150, par exemple entre 3 et 80, et en particulier inférieure à 50 mPa.s, par exemple inférieure à 20 mPa.s, par exemple inférieure à 10 mPa.s

L'avancement de la réaction et la viscosité sont ici liés.

La densité de la couche ainsi que la possibilité pour celle-ci d'être formée d'une seule surface fermée (2 dimensions) sans trous, i.e. de genre O en topologie, accroît encore la résistance au relargage de la surface interne du flacon.

Par solvant on entend une substance différente de l'eau, qui a la propriété de dissoudre, de diluer ou d'extraire d'autres substances sans les modifier chimiquement et sans lui-même se modifier.

Par fabrication d'une couche barrière de revêtement de la face interne d'un récipient, on entend la fabrication d'une solution de recouvrement formant, après gélification puis solidification, une couche de matériau protecteur, ainsi que le recouvrement proprement dit c'est-à-dire l'apposition superficielle d'une telle solution sur la surface d'un objet formé d'un autre matériau, pour créer après gélification et durcissement cette couche de protection de façon solidaire et durable (c'est à dire supérieure à plusieurs années).

Plus précisément on observe un meilleur effet barrière lorsque la résistance hydrolytique lors de mesures successives est en moyenne meilleure qu'avec l'art antérieur d'au moins dix pour cent, avantageusement 30 % voire 50 % et jusqu'à 80% (et donc la capacité de relargage qui lui est proportionnelle).

Par couche neutre de recouvrement d'une paroi d'un récipient, on entend une couche qui ne relargue pas dans le liquide contenu dans ledit récipient, d'éléments en quantité supérieure à quelques ppm, par exemple 1 ou 2 ppm après mise en contact pendant un temps déterminé avec le liquide à une température de test, par exemple 45° C pendant un mois.

Enfin la dernière étape de séchage à une température déterminée se fait avantageusement immédiatement après l'application de la solution.

Par immédiatement on entend tout de suite ou dans les quelques minutes qui suivent en fonction du procédé industriel (< à 60 mn).

C'est cette étape de séchage qui forme définitivement la couche barrière dure selon le mode de réalisation de l'invention plus particulièrement décrit ici, et qui sera utilisée telle quelle, après stockage éventuel, pour être rempli par le parfumeur.

Aucune autre étape de procédé tel que chauffage ou traitement chimique n'est donc prévue après cette étape de séchage avant le remplissage.

Le relargage d'ions par le récipient est très réduit.

En d'autres termes, la capacité d'un récipient, dont la face interne est sensiblement entièrement recouverte, de résister au relargage d'éléments, est améliorée.

En résumé, la couche hybride organominérale de revêtement de la présente invention permet ainsi d'assurer une fonction barrière non seulement pour le produit contenu vis-à-vis des influences extérieures mais également des relargages à l'intérieur du produit par les parois du récipient ou par la couche elle-même, ainsi que de limiter les interactions entre le revêtement et les parois du récipient.

Un tel résultat est obtenu sans traitement ultérieur du récipient (qu'il soit calorique ou chimique) et dans des conditions de stockage appropriées, les mesures étant effectuées par exemple par le biais des méthodes de détermination prévues par la norme ISO 4802-2, ou par titrage suivant la norme ISO 4802-1.

Classiquement la résistance hydrolytique est mesurée avant traitement, et après traitement, par détermination de la quantité d'oxyde de sodium et d'autres oxydes alcalins ou alcalino-terreux relargués lors d'un traitement en autoclave à 121°C pendant 60 minutes, les mesures étant par exemple ensuite effectuées de façon connue en elle-même par spectrométrie de flamme.

Dans la présente demande il sera fait indifféremment référence à la résistance hydrolytique et à la capacité de la couche à résister au relargage d'une paroi en verre ou en plastique, les mesures de cette dernière étant effectuées par tout procédé connu en soi de l'homme du métier comme par exemple par spectrométrie de flamme.

Avec l'invention, on constate ainsi que des relargages ultérieurs notamment tels que testés de façon standardisée en autoclave ou autre comme décrit ci-dessus, ne permettent plus de mesurer des taux de relargages significatifs.

Avantageusement et dans le cas de récipient ou flacon en verre, on effectue une préchauffe des flacons à 80-90°, ce qui permet de favoriser l'accroche des couches hybrides de pharmacie par exemple.

Dans des modes de réalisation avantageux, on a par ailleurs et/ou de plus recours à l'une et/ou à l'autre des dispositions suivantes :

- la solution comprend au moins deux premiers précurseurs et/ou au moins deux seconds précurseurs ;
- la solution comprenant au moins un second précurseur et du silicone, elle comprend également un surfactant ;
- dans le cas de récipient ou flacon en verre, la température déterminée de séchage est comprise entre 140°C et 220°C ;
- le solvant comprend du butoxyéthanol et/ou de l'éthanol ;
- le premier précurseur est pris parmi l'orthosilicate de tétraéthyle et le triméthoxyméthylsilane ;
- le surfactant est pris parmi les polyéthylènes glycol de masse molaire comprise entre 1000 et 2000 g.mol$^{-1}$, et le polyéthylène glycol tert-octylphenyl ether (connu sous la dénomination TRITON™ X-100 de la société Thermo Fischer)
- le silicone est du polydimethylsiloxane de viscosité 10 centistokes à 25°C ou du polyphenyl-methylsiloxane de viscosité 20 mPa.s à 25°C ;
- l'acide catalyseur est de l'acide citrique ;
- le second précurseur est pris parmi la famille des silanes dipodaux. L'utilisation de silanes dipodaux permet notamment une très bonne accroche de la couche de revêtement sur le récipient en particulier en verre ;
- le second précurseur est pris parmi l'octadecyltrimethoxysilane, le (1,2-BIS(triethoxysilyl)ethane, le BIS(3-(trimethoxysilyl)propyl)amine et la famille des fluoroalkyl silanes ;

- la solution comprend pour un volume total de 100 unités, un mélange de entre 58 et 77 unités en volume de solvant, ledit volume de solvant comprenant, pour un volume total de solvant de 100 unités, entre 50 et 95 unités en volume de butoxyethanol et entre 5 et 50 unités en volume d'éthanol, entre 8 et 28 unités en volume de premier précurseur (alkoxysilanes), entre 4 et 11 unités en volume de second précurseur (organosilanes), entre 0,3 et 2 unités en volume d'acide et entre 3 et 17 unités en volume d'eau ;

- la solution comprend pour un volume total de 100 unités, entre 62 et 77 parts de solvant, dont pour un volume total de solvant de 100 unités ou parts 50 à 95 parts de butoxyéthanol et de 5 à 50 parts d'éthanol, entre 6 et 20 parts de premier précurseur alkoxysilanes (par exemple TEOS) entre 8 et 12 parts de précurseurs organosilanes, entre 1 et 14 parts de l'huile de silicone et entre 0,3 et 1 parts d'acide citrique et entre 2 et 4 unités en volume d'eau ;

- on ajoute dans la solution un pigment et/ou additif fonctionnel. Par exemple, mais de façon non limitative, des pigments connus sous les dénominations Iriodin™, ou Pyrisma™, marques déposées de la société MERCK). Il s'agit de produits vendus en poudre comprenant du Mica, du $TiO_2$ (rutile) (de 29-48 % dans l'Iriodin™ et de 57-67 % dans le Pyrisma™) et du $S_nO_2$ (1-25 microns) ;

- on forme la solution comprenant du surfactant, par :

  - une première étape de formation d'un premier mélange de surfactant et de solvant, et on place le premier mélange sous agitation pendant un premier temps déterminé avec ou sans passage de ce premier mélange aux ultrasons,

  - une deuxième étape de formation d'un deuxième mélange de solvant et de premier(s) et second(s) précurseurs, et on place sous agitation le deuxième mélange pendant un deuxième temps déterminé,

  - une troisième étape d'introduction en gouttes à gouttes de l'acide dans le deuxième mélange pour former un troisième mélange, et on place sous agitation le troisième mélange pendant un troisième temps déterminé,

  puis par mélange du premier mélange et du troisième sous agitation pendant un quatrième temps déterminé.

Les premier, deuxième, troisième temps déterminés sont compris entre 1 min et 30 min, et sont optimisés en fonction des quantités respectives des produits mélangés pour permettre une complexification optimisée. Le quatrième temps avec tous les ingrédients dure au moins 240 min.

L'invention propose également un récipient obtenu par le procédé décrit ci-dessus.

Elle concerne également un récipient propre à contenir des produits biocompatibles avec l'homme et/ou l'animal, comprenant une surface interne, caractérisé en ce que ladite surface interne est recouverte sur au moins une partie d'une couche Sol-gel de revêtement solidifiée obtenue à partir d'une solution contenant au moins un solvant, de l'eau, au moins un premier précurseur moléculaire complexant de la famille des alkoxysilanes, au moins un second précurseur moléculaire organofonctionnel et/ou du silicone, et un acide catalyseur, ledit revêtement formant une matrice hybride organo-minérale agencé pour réaliser au moins une barrière chimique.

Avantageusement la couche de revêtement est d'une épaisseur comprise entre 60 et 450 nm (lorsqu'elle ne contient pas de pigment de taille micrométrique).

Egalement avantageusement la solution comprend du $SiO_2$, un pigment coloré pris, seul ou en combinaison, parmi les oxydes métalliques comprenant du cobalt et du titane, les oxydes métalliques comprenant du cuivre et du chrome, des pigments photochromes, les familles de composés comprenant les micas (comme le Pyrisma™ et/ou l'iriodin™), les quinacridone, les Phtalocyanine, les Chinophtalon et les composés formés d'une couche d'aluminium et/ou ses oxydes, des composés comprenant des particules nano-argent colloïdales et/ou les oxydes de titane et/ou les oxydes de cérium et/ou de l'Argent ou du noir de carbonne.

Particulièrement avantageusement le pigment comprend des micas.

Dans un mode de réalisation avantageux le récipient est en verre.

Egalement avantageusement le récipient est en matière plastique ou en aluminium.

L'invention sera mieux comprise à la lecture de la description qui suit de modes de réalisation décrits ci-après à titre d'exemples non limitatifs et en référence aux figures qui l'accompagnent dans lesquelles :

La figure 1 est un organigramme montrant les étapes d'un procédé de fabrication d'une couche de revêtement selon un mode de réalisation de l'invention.
La figure 2 est un mode de réalisation d'un récipient selon l'invention.
La figure 3 montre schématiquement en coupe un mode de réalisation d'un dispositif mettant en œuvre le procédé selon un mode de réalisation de l'invention.

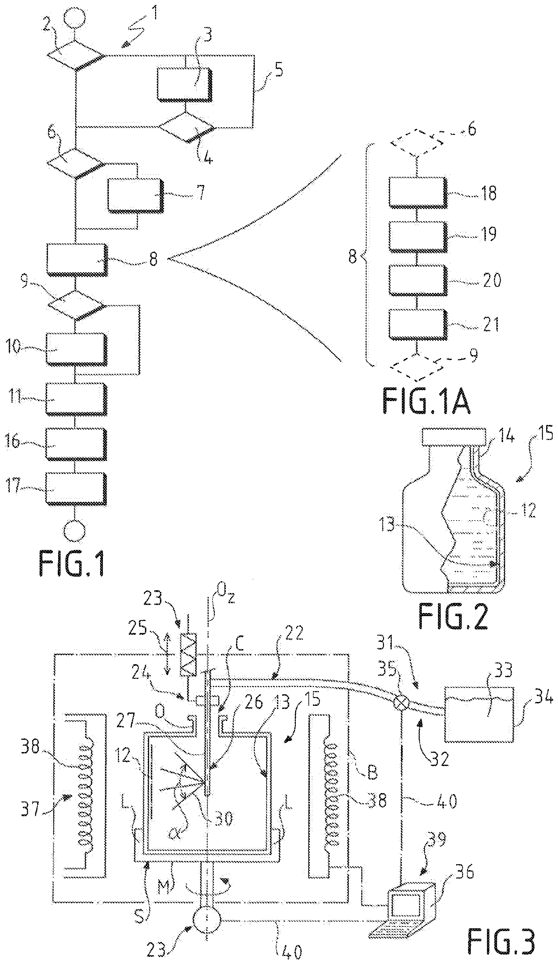

La figure 1 montre un organigramme 1 donnant les principales étapes d'un procédé selon le mode de réalisation de l'invention plus particulièrement décrit ici.

Le procédé comporte une étape préliminaire (non représentée) d'approvisionnement en au moins un récipient ou flacon à traiter.

Le récipient est formé d'un matériau qui convenablement traité va permettre de contenir des produits biocompatibles avec l'homme et/ou l'animal, c'est-à-dire compatibles avec une ingestion et/ou une application sur le corps humain ou animal (médicaments, produits cosmétiques...).

Plus précisément le procédé comprend tout d'abord ou non (test 2) une étape 3 de passivation de la face interne du récipient d'une façon connue en elle-même. C'est par exemple par remplissage d'un liquide aqueux d'extraction, par exemple en eau de qualité R ou $R_1$ puis vidage de l'eau après un temps déterminé.

Chacun des modes de réalisation de passivation (étape 3) peut être réitéré plusieurs fois (test 4 lien 5) par exemple deux fois.

Cette étape de passivation réduit encore la quantité d'ions risquant d'être relargués par la suite dans le contenu du récipient, notamment lorsque la couche de revêtement ne recouvre pas l'intégralité ou la plus grande part de la surface interne du récipient.

Elle prépare également avantageusement la face interne pour l'adhésion de la couche de revêtement.

L'étape (facultative) de passivation est ensuite et par exemple (test 6) suivi d'une étape 7 de préparation du support.

Cette étape peut par exemple être une étape de préchauffage entre 80°C et 90°C (pour des flacons en verre ou en plastique.

Après cette étape on procède, si cela n'a pas été préalablement effectué parallèlement ou par ailleurs, par exemple dans un lieu séparé et dans une période de temps avant son application qui peut atteindre plusieurs heures, à une étape 8 de préparation et de formation d'une solution selon l'invention.

L'étape 8 de préparation comprend une étape de mélange des constituants de la couche.

Dans un premier mode de réalisation le mélange s'effectue par exemple dans un bac avec agitateur à une température et pendant un temps déterminé, par exemple à une température comprise entre 10°C et 50°C, par exemple comprise entre 15°C et 35°C par exemple 24°C (température ambiante) et mélangé pendant une durée comprise par exemple entre 10 mn et 1 h, par exemple comprise entre 25 mn et 45 mn par exemple 30 mn.

Les constituants du mélange sont ajoutés sensiblement simultanément, les constituants étant donc formés d'au moins un solvant, de l'eau, d'au moins un premier précurseur moléculaire complexant de la famille des alkoxysilanes, d'au moins un second précurseur moléculaire organofonctionnel et/ou de silicone et d'un acide catalyseur, et ce dans des proportions agencées pour former in fine une solution à l'origine d'une barrière hybride organo-minérale propre à réaliser au moins une barrière chimique, et qui seront détaillées ci-après.

L'étape 8 de mélange est suivie de (et/ou comprend), s'il y a lieu (test 9) un ajout (étape 10) d'au moins un surfactant et/ou d'au moins un pigment.

Suit une étape 11 d'application de la solution complexe 12 ainsi formée (voir figure 2) sur une partie de la face interne 13 de la paroi 14 du récipient 15 à enduire, ladite solution étant en cours d'hydrolyse et de condensation. Puis une étape 16 de séchage de la solution appliquée à une température déterminée dépendant du matériau du récipient est réalisée, avant une étape 17 d'évacuation et stockage.

Dans un mode de réalisation (figure 1A), et par exemple dans le cas où le procédé met en œuvre un surfactant l'étape 8 de mélange comprend une première sous étape 18 de formation d'un premier mélange de surfactant et de solvant (par exemple 0,5 g de surfactant dissous dans 7 à 10 ml de solvants) g du mélange final) pendant un premier temps déterminé, par exemple de quelques minutes avec passages alternés aux ultrasons.

On peut ici également ajouter le silicone après dissolution du surfactant.

Puis on réalise une deuxième sous étape 19 de formation d'un deuxième mélange de solvant et de premier et second précurseur, qu'on place sous agitation pendant un deuxième temps déterminé supérieur à 5 mn, préférentiellement supérieur à 15 mn par exemple 20 mn quand il s'agit d'amine dipodal très réactive.

Cela va permettre d'avoir entre 8 et 28 parts de précurseur alkoxysilane et entre 4 et 25 parts de sources organosilanes.

Une troisième sous-étape 20 d'introduction en goutte à goutte de l'acide, par exemple de l'acide citrique est ensuite réalisée dans le deuxième mélange, pour former un troisième mélange avec mixage pendant un troisième temps déterminé supérieur à 10 mn, par exemple 15 mn.

Puis (étape 21) on mixte le premier mélange avec le troisième mélange pendant un quatrième temps déterminé compris entre 3 et 6 h, par exemple 4 h.

Les proportions et temps de mélange, ainsi que les vitesses auxquelles ils sont effectués sont adaptés en fonction des caractéristiques recherchées pour le revêtement, et de façon ajustée à la portée de l'homme du métier pour obtenir la matrice hybride de l'épaisseur souhaitée et le rôle de la barrière chimique recherchée pendant plusieurs mois et au vu des résultats extrapolables détaillés ci-après en référence aux tableaux I à III.

Comme indiqué ci-dessus les mélanges s'effectuent dans un liquide aqueux permettant l'hydrolyse des précurseurs, et une bonne fluidification permettant une application plus aisée.

La solution d'acide citrique avant introduction dans le mélange est par exemple de concentration 1,04 mol/l, (comprise entre 0,5 et 1,6 mol/l). Dans le sol préparé la concentration en acide est de 0,05 à 0,3 mol/l.

La catalyse et le séchage, par exemple à 70°C pour le matériau plastique, et compris entre 140°C et 220°C pour le verre, par exemple 180°C, conduisent à obtenir une gélification qui donne une couche solide même sans cuisson complémentaire.

Dans les modes de réalisation plus particulièrement décrits ici, le solvant est du Butoxyethanol ou de l'éthanol, le premier précurseur est de l'orthosilicate de tétraéthyle (TEOS), le second précurseur est de l'octadecyltrimethoxysilane et/ou de l'amine dipodal, l'acide citrique de concentration entre 3 et 19 parts d'eau acide pour 100 parts en valeur de la solution totale, et le silicone du polydimethylsiloxane de viscosité 10 centistokes à 25°C.

On a représenté sur le tableau I ci-après les paramètres des différents essais 1 à 20 effectués permettant d'illustrer les excellents résultats de l'invention, en comparaison avec un flacon brut (essai 1 - verre de référence) et un flacon recouvert d'une couche SOL GEL classique (non hybride) (essai 2) telle que réalisé selon le procédé décrit ci-après, avec comme solvant du butoxyethanol, un seul précurseur (TEOS), de l'acide (ici citrique pour permettre la comparaison bien qu'un tel acide ne soit pas utilisé de façon connue car peu actif dans une réaction SOL GEL, et du polyéthylène glycol (PEG) de masse moléculaire 1 500g mol$^{-1}$ (comme solvant additionnel).

On a ensuite fait varier les paramètres suivants :

- ajout d'éthanol comme solvant additionnel et/ou complémentaire (essais 3 à 20) dans diverses proportions en faisant par ailleurs varier les proportions du premier solvant i.e. le butoxyethanol ;
- ajout d'octadecyltrimethoxysilane comme second précurseur (essais 4 à 20) ;
- les proportions d'acide citrique (essais 2 à 20) ;
- le séchage et sa température (essais 2 à 20), celle-ci étant cependant choisie pour l'essentiel des tests à 200°C pendant 1 heure, pour permettre la comparaison ;
- ajout ou non d'un deuxième second précurseur, en l'occurrence un amine dipodal (essais 16 à 20) ;
- ajout de silicone (essais 15, 17 à 20) ;
- mise en œuvre d'une opération préalable de séchage (essai 14).

Les résultats de ces différents tests ou essais (cf tableau III) sont ensuite examinés au vu des critères suivants :

- Critère A : indiquant la tenue en heure avant dégradation du revêtement à 50°C en cas d'attaque de ce dernier par de l'acide citrique concentré tamponné à pH 8 par ajout de soude (3 %, pH 8) (< 65 signifie inférieur à 65 heures)
- Critère B : La résistance hydrolytique (Rh)
- Critère C : La détérioration mécanique (observée visuellement)
- Critère D : le $\tau$ d'élément extractible ou autrement dit les quantités totales d'extractibles en microgramme/L (initiales anglo-saxonnes de Inductively Coupled Plasma).
- Critère E : Commentaires.

Le récipient utilisé est un flacon rond de 100 ml en verre Type 3 (normalisé).

Les tests ont été effectués selon le protocole suivant :

Préparation :

- Dans un bécher dissoudre 0,1 g de PEG 1500, et le silicone s'il y a lieu, dans 2 ml de butoxyethanol (ci-après également désigné en abrégé par « buto » ou « butoxy ») sous agitation pendant de l'ordre de 45 mn, le temps en fait de dissoudre le surfactant.
- Dans un flacon introduire 11 ml de butoxy et le TEOS, pour obtenir un second mélange qu'on laisse sous agitation pendant 20 mn.

C'est également à ce stade qu'on va introduire pour les essais concernés les 2 ml (ou 2,5 ml) d'Octadecyl, l'amine dipodal s'il y a lieu et/ou les 400 µl dipodal BTSE etc.... Le dipodal BTSE est un précurseur organofonctionnel de formule 1-2 BIS (TRIETHOXYSILYL) ETHANE.

- Après ces 20 mn d'agitation de la solution ou sol, y introduire la quantité d'eau acidifiée et mélanger pendant 15 min.
- Puis introduire dans le sol, le mélange du bécher de buto + PEG 1500 + le silicone s'il y a lieu.
- Mélanger le tout pendant 4 h.

Pour l'application du sol sur la surface interne du flacon, on prévoit :

- L'inclinaison ou non du flacon par rapport à l'axe de la buse qui est ici utilisée pour l'aspersion sur la paroi à revêtir.
- Sa mise en rotation.
- La mise en vibration de la buse pour faciliter le passage et la dispersion du produit.
- Le contrôle du débit du produit et de la pression d'air variables pendant le cycle de dépôt, effectuée de façon à la portée de l'homme du métier pour optimiser l'application au vu des autres paramètres.

En conclusion le tableau I donne les caractéristiques des tests effectués. Le tableau II donne les éléments additionnels complétant les caractéristiques spécifiées dans le tableau I pour les tests 15 à 20, et le tableau III donnent les résultats des tests pour les proportions et mélanges tels que détaillés aux tableaux I et II.

TABLEAU I

| ESSAI | Buto. ml | Ethanol ml | TEOS ml | Octadecyl. ml | Acide ml | PEG 1500 g | Séchage °C |
|---|---|---|---|---|---|---|---|
| 1 | | | | | | | |
| 2 | 14 | | 4 | | 4000 | 0,1 | 200-1h |
| 3 | 7 | 7 | 4 | | 4000 | 0,1 | 150 |
| 4 | 16 | 1 | 2 | 2 | 1000 | 0,1 | 200-1h |
| 5 | 16,3 | 1 | 2 | 2 | 750 | 0,1 | 200-1h |
| 6 | 11,5 | 6 | 2 | 2 | 600 | 0,1 | 200-1h |
| 7 | 16,5 | 1 | 2 | 2 | 500 | 0,1 | 200-1h |
| 8 | 10,5 | 7,4 | 2 | 2 | 100 | 0,1 | 200-1h |
| 9 | 16 | 1 | 2 | 2 | 1000 (50 % acide) | 0,1 | 200-1h |
| 10 | 16,3 | 1 | | 2 | 750 | 0,1 | 200-1h |
| 11 | 16,3 | 1 | 2 | 2 | 750 | 0,1 | 200-3h |
| 12 | 16,3 | 1 | 1,5 | 2,5 | 750 | 0,1 | 200 |
| 13 | 16,5 | 1 | 2 | 2 | 500 | 0,1 | 200-1h |
| 14 | 13,5 | 4 | 2 | 2 | 500 | 0,1 | 200-1h |
| 15 | 16 | 1 | 2 | 2 | 750 | | 200-1h |
| 16 | 16 | 1 | 2 | 2 | 750 | | 200-1h |
| 17 | 16 | 1 | 2 | 2 | 750 | 0,1 | 200-1h |
| 18 | 16 | 1 | 2 | 2 | 750 | 0,1 | 200-1h |
| 19 | 13 | 1 | 2 | 2 | 750 | 0,1 | 200-1h |
| 20 | 16 | 1 | 2 | 2 | 750 | 0,1 | 200-1h |

TABLEAU II

| ESSAI | Amine Dipodal | Dipodal BTSE | Silicone | Préchauffage Flacon | Séchage |
|---|---|---|---|---|---|
| | microlitres | | microlitres | °C | °C |
| 14 | | | | 80 | 200 - 1 h |
| 15 | | | 400 | | 200 - 1 h |
| 16 | 200 | | | | 200 - 1 h |
| 17 | 200 | | 400 | | 200 - 1 h |
| 18 | 50 | | 400 | | 200 - 1 h |

(suite)

| ESSAI | Amine Dipodal | Dipodal BTSE | Silicone | Préchauffage Flacon | Séchage |
|-------|---------------|--------------|----------|---------------------|---------|
|       | microlitres   |              | microlitres | °C              | °C      |
| 19    | 125           | 400          | 3000     |                     | 200 - 1 h |
| 20    | 200           |              | 400      |                     | 200 - 1 h |

TABLEAU III

| ESSAI | Vieillissement A | RHB | Resistance C | Extractibles D | Commentaires E |
|-------|------------------|-----|--------------|----------------|----------------|
| 1     |                  | 3,04 | MAUVAISE    | 16             |                |
| 2     |                  | 0,7 |              | 13,03          | amélioration RH mais extractibles encore élevés |
| 3     |                  | 0,41 |             | 24,38          | dito           |
| 4     | <65              | 0,08 | OK          | 1,58           | Amélioration nette |
| 5     | <130             | 0,07 | OK          | 1,29           | Sol plus homogène et stable |
| 6     |                  | 0,36 | -           | 2,38           | Préparation plus claire |
| 7     |                  | 0,3 | -            | 1,5            | Préparation plus claire |
| 8     |                  | 0,45 | -           | 2,93           | Préparation claire |
| 9     | <130             | 0,15 | -           | 1,72           | sol blanc homogène |
| 10    | <130             | 0,07 | OK          | 1,29           | Sol plus homogène et stable |
| 11    | <65              | 0,21 | -           | 1,29           | Cuisson trop longue |
| 12    |                  | 0,53 | -           | 3,02           | trop d'octadecyl |
| 13    |                  | 0,3 | -            | 1,5            | Sol plus claire, |
| 14    | 200              | 0,39 | OK          | 2,03           | Préchauffage permet un renfort de la tenue |
| 15    | >480             | 0,45 | -           |                | silicone permet une meilleure resistance chimique mais une moins bonne tenue RH |
| 16    | <65              | 0,25 | OK          | 2,78           | Aspect graineux revêtement |
| 17    | >415             | 0,37 | OK          | 1, 94          |                |
| 18    | <200             | 0,22 | OK          |                | Pas assez d'amine dipodal pour résister au vieillissement |
| 19    | >415             | 0,26 | OK          |                | Quantité amine dipodale optimisée pour résistance et aspect |
| 20    | >415             | 0,34 | OK          |                | Idem avec aspect meilleur encore |

Le tableau III montre que le verre seul (essai ou test 1) présente des caractéristiques de résistivité Rh et d'extractabilité (testée de façon connue comme précisé ci-avant) mauvaise.

Le verre traité avec un SOL GEL classique (test 2 et 3) présente une meilleure résistivité (Rh plus faible) mais a par contre un taux d'extractabilité très élevé.

De tels résultats ont notamment entrainé un rejet de l'utilisateur des techniques de revêtement SOL GEL dans les domaines où l'absence de contamination est fortement recherchée, même si un séchage à 200°C (test 2) permet d'améliorer les résultats.

Avec les tests 4 à 20 où un second précurseur (l'octadecyltrimethoxysilane) en plus du premier précurseur (TEOS) est prévu et un premier solvant (le butoxyéthanol) et un deuxième solvant (dans un rapport de 1,5 à 16) à savoir l'éthanol, on obtient d'excellents résultats en matière de Rh, et d'extractabilité.

La résistance mécanique est globalement satisfaisante.

On notera cependant que dans les tests 4 à 8, où l'on fait varier la quantité de premier solvant, de meilleurs résultats sont obtenus en augmentant la proportion, toutes choses égales par ailleurs, de butoxyéthanol, ainsi qu'en faisant varier la quantité d'acide.

Le test 14 montre l'utilité d'un préchauffage par rapport à l'absence de préchauffage (test 13) sur la tenue.

Les tests 15 et 17 à 20 montrent la sérieuse amélioration qu'entraîne l'ajout de silicone notamment en combinaison avec l'ajout d'un second précurseur (l'amine dipodal) pour une meilleure tenue au vieillissement à l'acide citrique, les tests 18 à 20(comparés au test 17) démontrant cependant qu'il faut une quantité suffisante de second précurseur (amine dipodal ou silice dipodale), si l'on veut améliorer la résistance au vieillissement.

Dans tous ces modes de réalisation le premier précurseur moléculaire est de l'orthosilicate de tétraéthyle connu de l'homme du métier sous la dénomination abrégée TEOS et le catalyseur est de l'acide citrique.

Avantageusement on mélange le solvant et le premier précurseur, puis le second précurseur et l'acide citrique, la quantité d'eau de dissolution de l'acide citrique étant suffisante et/ou calculée pour qu'il n'y ait pas d'autres apports en eau.

Dans un mode de réalisation on adjoint au mélange des additifs adaptés pour réaliser une fonction.

Les fonctions peuvent être de bloquer les interactions contenu-contenant et environnement-contenu tel que limiter le relarguage, colorer ou ajouter des effets visuels à la couche, bloquer les rayonnements (UV par exemple), capter de l'oxygène, modifier l'activité de ou l'énergie de surface pour influer sur les facteurs de glissement du produit sur la paroi du récipient, capturer les composés oxygéné et/ou l'oxygène, sécuriser en terme biologique (fonction biocide, antibiotique, ...).

Ces fonctions sont réalisées par adjonction au sol-gel en solution d'éléments pris parmi par exemple dans l'ensemble SiO2, pigment coloré, oxyde de cérium et/ou Argent.

La quantité adjuvée est corrélée à la nature de la fonction recherchée. Par exemple une fonction de blocage peut être réalisée par un ajout de SiO2 en concentration par exemple comprise entre $3.5g.l^{-1}$ et $20g.l^{-1}$, par exemple comprise entre $4.5g.l^{-1}$ et $18g\ l^{-1}$, et/ou une fonction biocide peut être réalisée par un ajout d'argent en concentration par exemple comprise entre $0.9g.l^{-1}$ et $2.5g.l^{-1}$, par exemple comprise entre $1.1g.l^{-1}$ et $2.2g.l^{-1}$.

Après cette étape qui n'est pas obligatoire, le procédé selon le mode de réalisation de l'invention plus particulièrement décrit ici comprend l'étape 11 d'application de la solution en cours de gélification par exemple sur au moins une partie de la surface interne du récipient concerné, par exemple les 3/4 et/ou pour un motif déterminé (lettres, nom de produits, logos etc...). L'application forme ainsi une couche de revêtement sur ladite portion de la face interne.

La solution ou gel de revêtement est alors régulièrement apposée sur la surface interne du récipient, de façon à obtenir un dépôt d'une épaisseur régulière, sensiblement identique à l'endroit choisi.

L'étape 11 peut être réalisée de plusieurs manières et un mode de réalisation d'un dispositif d'application de la couche selon l'invention sera plus particulièrement décrit en référence à la figure 3 de façon nullement limitative.

L'application peut être réalisée immédiatement suite à la formation de la solution, après le début de la gélification ou peut être différée.

Par rapport à une fin de l'étape de préparation de la solution à un instant t0, l'application peut débuter par exemple à un instant déterminé t0+h, h étant une durée en heure.

Le gel étant sensiblement à la même température que celle de la formation de la solution, l'homme du métier adaptera la durée et les conditions de stockage, transport et/ou préparation avant application du différé pour obtenir les conditions rhéologiques (viscosité, vitesse d'accouplement, adhérence,...) optimales et/ou souhaitées pour l'application envisagée, en notant que l'évolution de la viscosité suit l'évolution de la durée.

Par exemple, à température ambiante, h est inférieur à 10 h, par exemple inférieur à 6 heures par exemple 3 h.

Si le gel est conservé à une température déterminée inférieure à la température de formation, la cinétique de l'évolution de ses caractéristiques physico-chimiques étant alors réduites, il peut être conservé pour une application ultérieure pendant plusieurs semaines.

Par exemple, la durée de conservation avant utilisation peut être d'une durée déterminée inférieure à 4 jours, par exemple inférieure à 3 jours, par exemple inférieure à 2 jours dans le cas de l'utilisation d'acide citrique.

La température est alors par exemple inférieure à 10°C.

Après l'étape d'application, suit l'étape 16 de séchage du gel ainsi appliqué à une température et pendant un temps déterminés.

Dans un mode de réalisation les récipients comprenant une ouverture sont placés avec celle-ci en bas dans le sens vertical, de sorte à évacuer l'excédent de solution appliquée.

Les récipients sont séchés dans une étuve, par exemple ventilée, à une température déterminée et pendant un temps déterminé.

Si le matériau constitutif du récipient est du verre, la température est comprise par exemple entre 140°C et 220°C, par exemple de 200°C, pour une durée de séchage comprise entre 15 mn et 3 h, par exemple entre 30 mn et 2 h, par exemple 1 h à 200°C.

Si le matériau constitutif du récipient est du plastique, la température est comprise par exemple entre 15°C et 90°C, par exemple à 80°C (pendant 1 heure), pour une durée de séchage comprise entre 10 mn et 120 mn, par exemple 60 mn.

Le séchage est fonction de la nature du solvant, le temps et la température de séchage devant être adaptés à celui-ci. Notamment la température doit être supérieure à la température d'ébullition du solvant à une pression déterminée.

Dans un autre mode de réalisation le séchage s'effectue pendant une durée et à une température ci-dessus mentionnées mais les récipients sont placés dans un four de type connu.

On peut répéter un nombre n déterminé de fois les étapes successives d'application de la solution formant produit de revêtement sur une partie de ladite face interne, d'évacuation de la solution de revêtement en excès et de séchage du produit.

Le nombre n est par exemple supérieur ou égal à deux, par exemple supérieur ou égal à trois, c'est-à-dire que l'on répète au moins trois fois les étapes.

Une fois séché, le récipient est ramené à une température ambiante selon une courbe de température déterminée.

La courbe de montée en température du récipient peut être linéaire ou par palier, et suit par exemple une courbe affine par exemple pour sécher le récipient jusqu'à la température maximum de séchage retenue, le coefficient directeur de la courbe de température (de chauffage) étant compris entre 2°C/mn et 5°C/mn.

La descente en température est par contre laissée libre pour être lente et éviter aussi des craquelures sur la couche de revêtement, générer une bonne adhérence et limiter les contraintes de dilatation différentielle de la couche et de la paroi du récipient.

Dans la suite on utilisera les mêmes numéros de référence pour désigner des éléments identiques ou similaires.

La figure 3 montre un dispositif 22 de revêtement 12 d'au moins une portion de la surface interne 13 d'un récipient 15, selon le mode de réalisation de l'invention plus particulièrement décrit ici.

Le récipient 15 est par exemple un flacon cylindrique en verre allongé autour d'un axe Oz. Il comporte à l'une de ses extrémités (extrémité haute), une ouverture en goulot. L'ouverture du goulot comprend un col C de diamètre plus petit que celui du récipient ou flacon.

Le récipient forme ainsi sensiblement une enceinte.

Le dispositif comprend un support S du récipient, comprenant par exemple une mâchoire M de rétention en forme de coupelle ou de U dont les branches L enserrent le culot, c'est à dire le fond du récipient fixé par des vis latérales (non représentées).

Des moyens 23 de mise en rotation du récipient autour de son axe Oz à une vitesse V déterminée sont prévus connus en eux-mêmes. La vitesse V peut être constante ou variable et régulée. Plus précisément les moyens comprennent par exemple une barre rotative d'entrainement du support s'étendant suivant l'axe Oz et un moteur d'entrainement de façon connue en elle-même.

Du côté du goulot du récipient 15 sont montés sur un bâti B, en traits mixtes sur la figure, des moyens 24 d'insertion/extraction (flèche 25) d'un outil ou buse 26 d'aspersion à l'intérieur du récipient.

La buse 26 comprend une tige ou tube 27 longitudinal relié à son extrémité aux moyens 24 d'insertion comprenant un actionneur 28 de déplacement longitudinal tel qu'un vérin.

L'action du vérin, solidaire de la buse 26 translate celle-ci d'une position initiale extérieure au récipient 13 à ses positions (par exemple variable en fonction d'une programmation de revêtement déterminée), de fonctionnement interne au récipient selon l'axe Oz.

Il permet ainsi une descente progressive continue ou par palier de l'outil d'application de la solution (gel en formation) de revêtement sur la surface interne du récipient.

Une succession de points ou de lignes avec des temps et des vitesses ajustées pour épouser la forme du flacon peuvent être employés en complément et/ou substitution des mouvements de rotation.

La buse engendre une vaporisation 30 selon un angle solide $\alpha$ de dispersion déterminé dépendant de la pression et de la vitesse d'éjection commandée de façon connue en elle-même.

Le tube est relié, à son extrémité opposée à un système 31 de distribution de la solution liquide de revêtement selon l'invention, à asperger, comprenant des moyens 32 d'alimentation de la solution 33 liquide ou sensiblement liquide pour permettre l'aspersion, à un débit D déterminé.

Le système 31 comprend ainsi un réservoir 34 de stockage dudit liquide et des moyens 35 de circulation du liquide (pompe doseuse) agencés pour réguler le débit D du liquide via un calculateur 36 et commande également les autres actionneurs mis en œuvre dans le dispositif.

Le réservoir comprend dans son fond un moyen mélangeur par exemple un agitateur (non représenté).

Le gel de revêtement est donc le matériau liquide durcissable de revêtement hybride obtenu par le procédé selon l'invention et notamment selon le mode de réalisation de l'invention plus particulièrement décrit ci-dessus.

Le dispositif comprend également des moyens 37 de chauffe du récipient 13 connus en eux-mêmes permettant l'élévation de la température d'une partie de la surface interne du récipient jusqu'à un seuil de température déterminé pour séchage.

Plus précisément l'échauffement de la surface interne s'effectue par exemple par radiation directe à partir de résistances chauffantes 38 disposées à l'extérieur du récipient ou par diffusion autour de la paroi du récipient disposée en contact par exemple avec une moufle de chauffage (non représentée).

Dans un mode de réalisation le récipient et la résistance sont sensiblement confinés dans une même enceinte de sorte à former un four pour un échauffement homogène du récipient.

Le dispositif comprend également un ordinateur ou automate 39 de commande numérique comprenant le calculateur 36.

Ceux-ci sont connectés via un bus 40 de données et de façon connue en elle-même, aux actionneurs du dispositif, à savoir à ceux de la mâchoire de rétention du récipient, c'est à dire du moteur d'actionnement en rotation, à ceux des moyens 24 d'insertion de la buse 26 dans le récipient (vérin), l'agitateur, ainsi qu'à ceux des moyens 35 de circulation/alimentation en liquide (pompe, vanne, buse) et des moyens 37 de chauffe (résistances électriques).

Le calculateur 36 est agencé pour calculer à partir des différentes consignes imposées, une loi de commande de chacun des actionneurs de façon connue en elle-même.

Comme il va de soi et comme il résulte également de ce qui précède, la présente invention n'est pas limitée aux modes de réalisation plus particulièrement décrits. Elle en embrasse au contraire toutes les variantes couvertes par les revendications.

## Revendications

1.  Procédé de fabrication d'une couche hybride organo-minérale (12) barrière et neutre, de revêtement de la face interne (13) d'un récipient (15) propre à contenir des produits biocompatibles avec l'homme et/ou l'animal, dans lequel

    - on forme une solution contenant au moins un solvant, de l'eau, au moins un premier précurseur moléculaire complexant de la famille des alkoxysilanes, au moins un second précurseur moléculaire organofonctionnel et/ou du silicone, et de l'acide citrique comme catalyseur,
    - on applique la solution ainsi complexée sur au moins une partie de la face interne (12) du récipient, la solution étant en cours d'hydrolyse et condensation, et
    - on sèche la solution ainsi appliquée à une température déterminée avant évacuation du récipient et stockage.

2.  Procédé selon la revendication 1, **caractérisé en ce que** la solution comprend au moins deux premiers précurseurs et/ou au moins deux seconds précurseurs.

3.  Procédé selon l'une quelconque des revendications précédentes, **caractérisé en ce que** la solution comprenant au moins un second précurseur et du silicone, elle comprend également un surfactant.

4.  Procédé selon l'une quelconque des revendications précédentes, **caractérisé en ce que** la température déterminée de séchage est comprise entre 140°C et 220°C.

5.  Procédé selon l'une quelconque des revendications précédentes, **caractérisé en ce que** le solvant comprend du butoxyéthanol et/ou de l'éthanol.

6.  Procédé selon l'une quelconque des revendications précédentes, **caractérisé en ce que** le premier précurseur est pris parmi l'orthosilicate de tétraéthyle et le triméthoxyméthylsilane.

7.  Procédé selon la revendication 3 ou l'une quelconque des revendications précédentes dépendantes de la revendication 3, **caractérisé en ce que** le surfactant est pris parmi les polyéthylènes glycol de masse molaire comprise entre 1000 et 2000 g.mol$^{-1}$, le polyéthylène glycol tert-octylphenyl ether et le polydiméthylsiloxane.

8.  Procédé selon l'une quelconque des revendications précédentes, **caractérisé en ce que** le second précurseur est pris parmi la famille des silanes dipodaux.

9.  Procédé selon l'une quelconque des revendications 1 à 7, **caractérisé en ce que** le second précurseur est pris parmi l'octadecyltrimethoxysilane, le (1,2-BIS(triethoxysilyl)ethane, le BIS(3-(trimethoxysilyl)propyl)amine et la famille des fluoroalkyl silanes.

**10.** Procédé selon l'une quelconque des revendications précédentes, **caractérisé en ce que** la solution comprend pour un volume total de 100 unités, un mélange de entre 58 et 77 unités en volume de solvant, ledit volume de solvant comprenant, pour un volume total de solvant de 100 unités, entre 50 et 95 unités en volume de butoxyethanol et entre 5 et 50 unités en volume d'éthanol, entre 8 et 28 unités en volume de premier précurseur, entre 4 et 11 unités en volume de second précurseur, entre 0,3 et 2 unités en volume d'acide et entre 3 et 17 unités en volume d'eau.

**11.** Procédé selon l'une quelconque des revendications 1 à 9, **caractérisé en ce que** la solution comprend pour un volume total de 100 unités, entre 62 et 77 parts de solvant, dont pour un volume total de solvant de 100 unités ou parts 50 à 95 parts de butoxyéthanol et de 5 à 50 parts d'éthanol, entre 6 et 20 parts de premier précurseur alkoxysilanes entre 8 et 12 parts de précurseur organosilanes, entre 1 et 14 parts de l'huile de silicone et entre 0,3 et 1 part d'acide et entre 2 et 4 parts d'eau.

**12.** Procédé selon l'une quelconque des revendications 10 et 11, **caractérisé en ce que** on ajoute dans la solution un pigment et/ou additif fonctionnel.

**13.** Procédé selon l'une quelconque des revendications précédentes, **caractérisé en ce que** l'on forme la solution par

- une première étape de formation d'un premier mélange de surfactant et de solvant, et on place le premier mélange sous agitation pendant un premier temps déterminé,
- une deuxième étape de formation d'un deuxième mélange de solvant et de premier et second précurseurs, et on place sous agitation le deuxième mélange pendant un deuxième temps déterminé,
- une troisième étape d'introduction en gouttes à gouttes de l'acide dans le deuxième mélange pour former un troisième mélange, et on place sous agitation le troisième mélange pendant un troisième temps déterminé,
- on forme la solution par mélange du premier mélange et du troisième sous agitation pendant un quatrième temps déterminé.

**14.** Récipient (15) propre à contenir des produits biocompatibles avec l'homme et/ou l'animal, comprenant une surface interne (13), **caractérisé en ce que** ladite surface interne est recouverte sur au moins une partie d'une couche (12) Sol-gel de revêtement solidifiée obtenue à partir d'une solution contenant au moins un solvant, de l'eau, au moins un premier précurseur moléculaire complexant de la famille des alkoxysilanes, au moins un second précurseur moléculaire organofonctionnel et/ou du silicone, et de l'acide citrique comme catalyseur, ledit revêtement formant une matrice hybride organominérale agencée pour réaliser au moins une barrière chimique et neutre.

**15.** Récipient (15) selon la revendication 14, **caractérisé en ce que** la couche de revêtement est d'une épaisseur comprise entre 60 et 450 mn.

**Patentansprüche**

**1.** Verfahren zur Herstellung einer organisch-anorganischen neutralen Hybrid-Sperrbeschichtung (12) für die Innenfläche (13) eines Behälters (15), der geeignet ist, für Mensch und/oder Tier biokompatible Produkte zu enthalten, bei dem:

- eine Lösung gebildet wird, die mindestens ein Lösungsmittel, Wasser, mindestens eine erste komplexbildende molekulare Vorstufe aus der Gruppe der Alkoxysilane, mindestens eine zweite organofunktionelle molekulare Vorstufe und/oder Silikon und Zitronensäure als Katalysator enthält,
- die derart komplexierte Lösung auf mindestens einen Teil der Innenfläche (12) des Behälters aufgetragen wird, wobei die Lösung in Hydrolyse und Kondensation befindlich ist,
- die derart aufgetragene Lösung bei einer bestimmten Temperatur getrocknet wird vor Behälterabtransport und Lagerung.

**2.** Verfahren nach Anspruch 1, **dadurch gekennzeichnet, dass** die Lösung mindestens zwei erste Vorstufen und/oder mindestens zwei zweite Vorstufen enthält.

**3.** Verfahren nach einem beliebigen der vorhergehenden Ansprüche, **dadurch gekennzeichnet, dass** die Lösung, die mindestens eine zweite Vorstufe und Silikon enthält, ferner ein oberflächenaktives Mittel enthält.

**4.** Verfahren nach einem beliebigen der vorhergehenden Ansprüche, **dadurch gekennzeichnet, dass** die bestimmte Trocknungstemperatur zwischen 140 ° und 220 °C liegt.

5. Verfahren nach einem beliebigen der vorhergehenden Ansprüche, **dadurch gekennzeichnet, dass** das Lösungsmittel Butoxyethanol und/oder Ethanol enthält.

6. Verfahren nach einem beliebigen der vorhergehenden Ansprüche, **dadurch gekennzeichnet, dass** die erste Vorstufe unter Tetraethylorthosilicat und Trimethoxymethylsilan ausgewählt ist.

7. Verfahren nach Anspruch 3 oder nach einem beliebigen der vorhergehenden von Anspruch 3 abhängigen Ansprüche, **dadurch gekennzeichnet, dass** das oberflächenaktive Mittel unter den Polyethylenglykolen mit einer molaren Masse zwischen 1000 und 2000 g.mol$^{-1}$, Polyethylenglykol tert-octylphenyl-ether und Polydimethylsiloxan ausgewählt ist.

8. Verfahren nach einem beliebigen der vorhergehenden Ansprüche, **dadurch gekennzeichnet, dass** die Vorstufe aus der Gruppe der dipodalen Silane ausgewählt ist.

9. Verfahren nach einem beliebigen der Ansprüche 1 bis 7, **dadurch gekennzeichnet, dass** die zweite Vorstufe unter Octadecyltrimethoxysilan, (1,2-Bis(triethoxysilyl)ethan, Bis(3-(trimethoxysilyl)propyl)amin und aus der Gruppe der Fluoralkylsilane ausgewählt ist.

10. Verfahren nach einem beliebigen der vorhergehenden Ansprüche, **dadurch gekennzeichnet, dass** die Lösung für ein Gesamtvolumen von 100 Einheiten eine Mischung von 58 bis 77 Volumeneinheiten Lösungsmittel enthält, wobei das Lösungsmittelvolumen für ein Lösungsmittelgesamtvolumen von 100 Einheiten 50 bis 95 Volumeneinheiten Butoxyethanol und 5 bis 50 Volumeneinheiten Ethanol, 8 bis 28 Volumeneinheiten der ersten Vorstufe, 4 bis 11 Volumeneinheiten der zweiten Vorstufe, 0,3 bis 2 Volumeneinheiten Säure und 3 bis 17 Volumeneinheiten Wasser enthält.

11. Verfahren nach einem beliebigen der Ansprüche 1 bis 9, **dadurch gekennzeichnet, dass** die Lösung für ein Gesamtvolumen von 100 Einheiten 62 bis 77 Lösungsmittelteile enthält, davon für ein Lösungsmittel-Gesamtvolumen von 100 Einheiten oder Teilen 50 bis 95 Butoxyethanolteile und 5 bis 50 Ethanolteile, 6 bis 20 Teile der ersten Alkoxysilane-Vorstufe und 8 bis 12 Teile der Organosilane-Vorstufe, 1 bis 14 Teile Silikonöl und 0,3 bis 1 Teil Säure und 2 bis 4 Wasserteile.

12. Verfahren nach einem beliebigen der Ansprüche 10 und 11, **dadurch gekennzeichnet, dass** der Lösung ein Pigment und/oder ein funktioneller Zusatz zugesetzt werden.

13. Verfahren nach einem beliebigen der vorhergehenden Ansprüche, **dadurch gekennzeichnet, dass** die Lösung gebildet wird durch:

    - einen ersten Schritt der Bildung eines ersten Gemisches aus oberflächenaktivem Mittel und Lösungsmittel, und das erste Gemisch für eine erste bestimmte Zeit gerührt wird,
    - einen zweiten Schritt der Bildung eines zweiten Gemisches aus Lösungsmittel und erster und zweiter Vorstufe, und das zweite Gemisch für eine zweite bestimmte Zeit gerührt wird,
    - einen dritten Schritt der tropfenweisen Einführung der Säure in das zweite Gemisch zur Bildung eines dritten Gemisches, und das dritte Gemisch für eine dritte bestimmte Zeit gerührt wird,
    - die Lösung durch Mischung des ersten Gemisches und des dritten Gemisches unter Rühren für eine vierte bestimmte Zeit gebildet wird.

14. Behälter (15), der geeignet ist, für Mensch- und/oder Tier biokompatible Produkte zu enthalten, umfassend eine Innenfläche (13), **dadurch gekennzeichnet, dass** die Innenfläche mindestens teilweise mit einer verfestigten Sol-Gel-Beschichtung überzogen ist, die durch eine Lösung mit mindestens einem Lösungsmittel, Wasser, mindestens einer ersten komplexbildenden molekularen Vorstufe aus der Gruppe der Alkoxysilane, mindestens einer zweiten organofunktionellen molekularen Vorstufe und/oder Silikon und Zitronensäure als Katalysator hergestellt ist, wobei die Beschichtung eine organisch-anorganischen Hybridmatrix bildet, die angeordnet ist, um mindestens eine chemische und neutrale Sperre zu bilden.

15. Behälter (15) nach Anspruch 14, **dadurch gekennzeichnet, dass** die Beschichtung eine Dicke zwischen 60 und 450 mn aufweist.

**Claims**

1.  Method for the manufacture of a hybrid organomineral neutral barrier layer (12) for coating the inner surface (13) of a receptacle (15) suitable for containing products biocompatible with humans and/or animals, in which

    - a solution containing at least one solvent, water, at least one first complexing molecular precursor of the family of alkoxysilanes, at least one second organofunctional molecular precursor and/or silicone, and citric acid as a catalyst, is formed,
    - the solution complexed in this way is applied to at least a part of the inner surface (12) of the receptacle, the solution being in the process of hydrolysis and condensation, and
    - the solution applied in this way is dried to a given temperature before emptying of the receptacle and storage.

2.  Method according to claim 1, **characterised in that** the solution comprises at least two first precursors and/or at least two second precursors.

3.  Method according to any one of the preceding claims, **characterised in that** the solution comprising at least one second precursor and silicone also comprises a surfactant.

4.  Method according to any one of the preceding claims, **characterised in that** the given drying temperature is between 140°C and 220°C.

5.  Method according to any one of the preceding claims, **characterised in that** the solvent comprises butoxyethanol and/or ethanol.

6.  Method according to any one of the preceding claims, **characterised in that** the first precursor is selected from among tetraethyl orthosilicate and trimethoxymethylsilane.

7.  Method according to claim 3 or any one of the preceding claims dependent on claim 3, **characterised in that** the surfactant is selected from among polyethylene glycols having a molar mass of between 1000 and 2000 g.mol$^{-1}$, polyethylene glycol tert-octylphenyl ether and polydimethylsiloxane.

8.  Method according to any one of the preceding claims, **characterised in that** the second precursor is selected from among the family of dipodal silanes.

9.  Method according to any one of claims 1 to 7, **characterised in that** the second precursor is selected from among octadecyltrimethoxysilane, (1,2-Bis(triethoxysilyl)ethane, Bis(3-(trimethoxysilyl)propyl)amine and the family of fluoroalkyl silanes.

10. Method according to any one of the preceding claims, **characterised in that** the solution comprises, for a total volume of 100 units, a mixture of between 58 and 77 units by volume of solvent, said volume of solvent comprising, for a total volume of solvent of 100 units, between 50 and 95 units by volume of butoxyethanol and between 5 and 50 units by volume of ethanol, between 8 and 28 units by volume of first precursor, between 4 and 11 units by volume of second precursor, between 0.3 and 2 units by volume of acid, and between 3 and 17 units by volume of water.

11. Method according to any one of claims 1 to 9, **characterised in that** the solution comprises, for a total volume of 100 units, between 62 and 77 parts of solvent, including, for a total volume of solvent of 100 units or parts, 50 to 95 parts of butoxyethanol and from 5 to 50 parts of ethanol, between 6 and 20 parts of first alkoxysilanes precursor, between 8 and 12 parts of organosilanes precursor, between 1 and 14 parts of silicone oil and between 0.3 and 1 part of acid and between 2 and 4 parts of water.

12. Method according to any one of claims 10 and 11, **characterised in that** a pigment and/or functional additive is added to the solution.

13. Method according to any one of the preceding claims, **characterised in that** the solution is formed by

    - a first step of forming a first mixture of surfactant and solvent, and the first mixture is placed under agitation for a first given time,

EP 3 463 690 B1

- a second step of forming a second mixture of solvent and of first and second precursors, and the second mixture is placed under agitation for a second given time,
- a third step of introducing acid drop by drop into the second mixture in order to form a third mixture, and the third mixture is placed under agitation for a third given time,
- the solution is formed by mixing the first mixture and the third under agitation for a fourth given time.

14. Receptacle (15) suitable for containing products biocompatible with humans and/or animals, comprising an inner surface (13), **characterised in that** said inner surface is covered over at least a part with a solidified coating sol-gel layer (12) obtained from a solution containing at least one solvent, water, at least one first complexing molecular precursor of the family of alkoxysilanes, at least one second organofunctional molecular precursor and/or silicone, and citric acid as a catalyst, said coating forming a hybrid organomineral matrix arranged to produce at least one neutral chemical barrier.

15. Receptacle (15) according to claim 14, **characterised in that** the coating layer has a thickness of between 60 and 450 nm.

FIG.1

FIG.1A

FIG.2

FIG.3

**EP 3 463 690 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010112792 A
- FR 2443484
- EP 2199264 A
- FR 2886309
- FR 2935594